# EUROPÄISCHE PATENTANMELDUNG

(11) **EP 1 162 223 A1**
(43) Veröffentlichungstag der Anmeldung: **12.12.2001**
(21) Anmeldenummer: 00112133.4
(22) Anmeldetag: 06.06.2000
(51) Int. Cl.: C08G 18/70, C08G 18/10, C09J 175/04

(54) **Reaktivierbarer Klebstoff**

(71) Anmelder: Sika AG, vorm. Kaspar Winkler & Co., CH-8048 Zürich (CH)
(72) Erfinder: Merz, Peter W., 8832 Wollerau (CH); Gutgsell, Michael, 8942 Oberrieden (CH); Tsuno, Shingo, 8049 Zürich (CH)
(74) Vertreter: Blum, Rudolf Emil Ernst

(57) **Zusammenfassung**

Es werden Klebstoffe beschrieben, die bei normalen klimatischen Bedingungen über einen gewissen Zeitraum lagerfähig sind und nach einem Aktivierungsschritt vernetzen. Die erfindungsgemässen Klebstoffe weisen bei Raumtemperatur eine butylkautschukartige Thermoplastizität auf und sind somit beim für das Zusammenfügen der Bauteile erforderlichen Verpressen plastisch verformbar und neigen nicht zu Rissbildungen. Diese erfindungsgemässe Konsistenz ermöglicht in vielen Fällen eine Direkthaftung ohne den Gebrauch von mechanischen Fixationen.

## Beschreibung

### Technisches Gebiet

Die vorliegende Erfindung betrifft reaktivierbare Klebstoffe, die bei normalen klimatischen Bedingungen über einen gewissen Zeitraum lagerfähig sind und erst nach einem Aktivierungsschritt vernetzen. Die erfindungsgemässen Klebstoffe sind thermoplastisch, bei Raumtemperatur (= RT) plastisch verformbar und vernetzen nach Zufuhr von Energie.

### Stand der Technik

Die zugrundeliegende Technologie ist bekannt und basiert auf Substanzen, die stabilisierte Isocyanatgruppen enthalten. Solche mit Amino- oder Hydroxylgruppen stabilisierte Isocyanatgruppen sind in den Patentschriften EP100507, EP062780, DE3230757, DE3403499, DE3403500 und US5710215 beschrieben. Gemäss Stand der Technik werden solche speziellen Systeme entweder für bei RT pastös applizierbare Klebstoffe, wie sie z.B. in EP0303183 offenbart sind, oder wie in US5710215 beschrieben, für bei RT-feste, nicht plastisch verformbare Klebstoffe verwendet. Die in EP0303183 und US5710215 beschriebenen Systeme weisen nicht die für die Direkthaftung geeignete Konsistenz auf. Unter Klebstoffsystem mit Direkthaftung werden Klebstoffsysteme verstanden, die nach dem Fügen der beiden Bauteile eine genügend hohe Festigkeit besitzen, was eine mechanische Fixation, wie sie bei pastösen Systemen erforderlich ist, nicht notwendig macht.

Die in der Patentschrift US5710215 beschriebenen reaktiven Hotmelts zeigen zwar bei RT eine genügend hohe Frühfestigkeit, jedoch sind sie bei RT nicht plastisch verformbar und verhalten sich bei Druckbelastung, wie z.B. auch Kerzenwachs, brüchig. Beim Fügen wäre diese spröde Eigenschaft nicht von Vorteil, da ein tolerantes Verbinden und eine Positionierung der beiden Bauteile zueinander nicht möglich wäre. Ausserdem besitzen diese reaktiven Hotmelts gemäss Stand der Technik, die einen hohen kristallinen Anteil aufweisen, nicht die gewünschten elastischen Eigenschaften, welche für das Verbinden von Bauteilen mit unterschiedlichen Verformungsverhalten erforderlich sind, um schädliche Spannungsspitzen im Fügebereich herabzusetzen.

Pastöse Klebstoffe mit Substanzen, die stabilisierte Isocyanatgruppen enthalten, haben den Nachteil, dass diese zu Verschmutzungsgefahr führen. Eine solche Verschmutzungsgefahr durch den Klebstoff ist für die Herstellung von Modulen ungeeignet, bei denen der Klebstoff bereits auf dem Substrat, Bauteil etc. aufgetragen ist und in diesem Zustand an die Fertigungslinie transportiert wird.

Ziel der vorliegenden Erfindung war es die Nachteile der oben beschriebenen Systeme zu beseitigen und Klebstoffe bereitzustellen, die bei normalen klimatischen Bedingungen über einen gewissen Zeitraum lagerfähig sind und nach einem Aktivierungsschritt vernetzen. Die erfindungsgemässen Klebstoffe weisen bei Raumtemperatur eine butylkautschukartige Thermoplastizität auf und sind somit beim für das Zusammenfügen der Bauteile erforderlichen Verpressen plastisch verformbar und neigen nicht zu Rissbildungen. Diese Konsistenz der erfindungsgemässen Klebstoffe ermöglicht in vielen Fällen eine Direkthaftung ohne den Gebrauch von mechanischen Fixationen.

### Ausführliche Beschreibung der Erfindung

Die erfindungsgemässen Klebstoffe zeichnen sich dadurch aus, dass sie mit Feuchtigkeit nicht reagieren, bei Raumtemperatur anfassbar, nach dem Fügen plastisch verformbar und ohne mechanische Fixationen direkthaftend sind, und nach einer Aktivierung mittels Energie aushärten.

Vorzugsweise enthalten sie:
A) mindestens einen Hydroxyl-, Amino- oder Mercaptogruppen enthaltenden, bei RT plastisch verformbaren Thermoplasten,
B) mindestens eine feste, mindestens zwei Isocyanatgruppen enthaltende Substanz, wobei die Oberfläche dieser Substanz mit aktiven Wasserstoffgruppen tragenden Verbindungen deaktiviert ist, und das Verhältnis der Isocyanatgruppen zu den aktiven H-Atomen zugunsten der Isocyanatgruppen liegt.

Abhängig von der Verwendung der Klebstoffe können diese zusätzlich mindestens eine weitere Komponente C enthalten, wie Weichmacher, Thixotropiermittel, Füllstoffe und Additive. Als Additive werden im Rahmen dieser Erfindung z.B. Katalysatoren, Trocknungsmittel, Pigmente, Antioxidantien, flammhemmende Zusätze, Haftvermittler etc. bezeichnet.

Der Hydroxylgruppen enthaltende Thermoplast A) kann auf verschiedene Weise aufgebaut werden: z.B. durch Kettenverlängerung eines Isocyanatgruppen enthaltenden Prepolymers mit einem Polyol, insbesondere einem Diol, z.B. Ethandiol, Propandiol, Butandiol, Hexandiol, niedermolekularen Propylenglycolen, Hydroquinone-di(2-hydroxyethyl)ether, Bisphenol-ethoxylat, 1,4-Cyclohexanedimethanol, N,N'-bis(Hydroxyethyl)piperazin etc. oder durch Terminierung der Isocyanatgruppen eines höhermolekularen Prepolymers mit z.B. Mercapto- oder Aminogruppen enthaltenden Hydroxylverbindungen, wie z.B. Aminoethanol, N-Methylaminoethanol, Mercaptoethanol etc. Ebenfalls ist die Terminierung mit zweifunktionellen Amino- bzw. Mercaptogruppen enthaltenden Verbindungen, wie z.B. gehinderten Diamin-Verbindungen, Mercaptoethylamin etc. denkbar.

Das Isocyanatgruppen enthaltende Prepolymer wird nach bekannter Vorschrift bei Temperaturen von 50 bis 100°C, vorzugsweise um 80°C, unter Vakuum oder gegebenenfalls nach Erstellen einer Inertgasatmosphäre und gegebenenfalls in Gegenwart eines Katalysators hergestellt. Diese Prepolymere sind Reaktionsprodukte von Isocyanatgruppen enthaltenden Substanzen, wie z.B. 1-Isocyanato-3,3,5-trimethyl-5-isocyanatomethylcyclohexan (Isophorondiisocyanat), 4,4'-Diphenylmethandiisocyanat, Hexamethylen-diisocyanat, Perhydro-2,4'- und Perhydro-4,4'-diphenylmethandiisocyanat, 2,4-und 2,6-Toluol-diisocyanat etc., mit irgendeiner mit Isocyanatgruppen reaktiven Verbindung, wobei die Umsetzung meistens stöchiometrisch, d.h. pro H-aktive Gruppe ein Isocyanatgruppen enthaltendes Monomer erfolgt. In einer bevorzugten Ausführungsform ist das Polyol linear, d.h. zweifunktionel, und ausgewählt aus der Gruppe der Polyetherglykole mit einem Molekulargewicht zwischen 400 und bis oberhalb von 20'000. Ferner können zur Optimierung des rheologischen Verhaltens bei der Applikation des Klebstoffes auf das Substrat zusätzlich bei RT-feste Polyole, wie z.B. Polyester, Polycarbonat etc., zugemischt werden, jedoch nur in dem Masse, dass der resultierende Thermoplast bei RT plastisch verformbar bleibt und beim Verformen nicht zu Rissbildungen neigt.

Die feste, mindestens zwei Isocyanatgruppen enthaltende Substanz B) ist im Thermoplasten A) sowie in anderen flüssigen Komponenten C, wie z.B. Weichmachern, Polyetherglykolen etc., aus Gründen der Lagerstabilität unlöslich, und es handelt sich um Isocyanatgruppen enthaltende Substanzen, wie sie z.B. in US5710215 aufgeführt sind. Ebenfalls ist die Stabilisierung der Isocyanatgruppen mit aktiven Wasserstoffgruppen tragenden Verbindungen in DE3230757 oder US5710215 beschrieben. Solche Stoffe haben - je nach Teilchengrösse des Feststoffs - infolge der Oberflächendeaktivierung unterschiedliche Verhältnisse zwischen Gruppen, die beim Aufbrechen der Teilchen aktiv sind, und die durch Abspaltung der Oberflächenschutzgruppe aktiviert werden.

Für den erfindungsgemässen Klebstoff liegt das Verhältnis der Isocyanatgruppen zu den aktiven H-Atomen zugunsten der Isocyanatgruppen. Der Gehalt der sehr reaktiven H-Atome, z.B. der Aminogruppen, ist vorzugsweise nur so hoch, wie es für die Stabilisierung der festen, Isocyanatgruppen enthaltenden Substanzen erforderlich ist.

Zur Aktivierung wird von Aussen Energie zugeführt, wobei verschiedene Energieformen, wie thermische, vibratorische und elektromagnetische Energieformen zum Tragen kommen. Für thermische Energiezufuhr sind z.B. Umluftofen, Heissluftfön, Heizmanschetten etc. zu erwähnen, für vibratorische Energiezufuhr kommt Ultraschall in Frage und für elektromagnetische Energieformen sind Infrarot, Mikrowellen, Hochfrequenz etc. geeignet.

Dank der vorteilhaften Eigenschaftskombination sind die erfindungsgemässen Klebstoffe zum Beispiel hervorragend geeignet für die Bereitstellung eines Fahrzeugscheibenmodules, bei welchem der erfindungsgemässe Klebstoff als Montageklebstoff bereits beim Glaszulieferer aufgebracht wird. Beim Fahrzeughersteller wird der erfindungsgemässe Klebstoff mittels Zufuhr von Energie aktiviert und zur Vernetzung gebracht. Die Energiezufuhr kann kurz vor dem Scheibeneinbau bzw. im gefügten Zustand erfolgen.

Ferner sind die neuen Klebstoffe bei RT anfassbar, bieten somit keine Verschmutzungsgefahr, sind aufgrund ihrer bei RT plastisch verformbaren Thermoplastizität, ähnlich einem Butylkautschuk, tolerant beim Scheibeneinbau und sind direkthaftend, was eine mechanische Fixation, z.B. mit Halterungen oder Gurte, nicht erforderlich macht.

Die erfindungsgemässen Klebstoffe können mittels einer Auspressvorrichtung, mit sogenannten Pumpanlagen, bei erhöhter Temperatur zwischen 50°C und 100°C gefördert werden. Diese Förderart eignet sich sowohl zur Herstellung von Modulen als auch für die direkte verbindung zweier Substrate.

Ausgehend von Modulen oder separaten Substraten und Klebstoffen können Klebeverbindungen dadurch hergestellt werden, dass ein mit einer Raupe aus erfindungsgemässem Klebstoff versehenes Substrat mit einem zweiten Substrat derart verbunden wird, dass der Klebstoff mit dem zweiten Substrat in Kontakt steht, wobei der Klebstoff vor oder nach dem Verbinden der Substrate durch Energiezufuhr aktiviert wird.

Die Erfindung wird nun anhand von Beispielen näher erläutert. Diese sollen die Erfindung weiter veranschaulichen, den Umfang der Erfindung aber in keiner Weise beschränken.

### Beispiel 1:

### Herstellung eines bei RT plastisch verformbaren Hydroxylgruppen enthaltenden Thermoplasten A)

Zu 800g eines Isocyanatgruppen enthaltenden Prepolymers mit einem Isocyanatgehalt von 2.85 %, hergestellt aus einem Polypropylendiol mit einem Molekulargewicht von 2000 und 4,4'-Diphenylmethandiisocyanat, werden 15.7g Butandiol-1,4 zugemischt und bei 80°C unter Vakuum gehalten. Das resultierende Prepolymer mit einem Isocyanatgehalt von 1% wurde mit Monoethylamin stöchiometrisch (NCO/NH2 = 1/1) versetzt.

### Beispiel 2:

### Herstellung einer festen und stabilisierten Isocyanatgruppen enthaltenden Paste B)

45g eines dimerisierten Toluol-diisocyanats, Desmodur TT (erhältlich von Bayer AG) wurden in 53g eines Polypropylendiols mit einem Molekulargewicht von 4000 und 2.3g eines Polypropylendiamins, Jeffamin D400 (erhältlich von Huntsman) dispergiert.

### Beispiel 3:

### Herstellung eines erfindungsgemässen Klebstoffes

Zu 72g frisch hergestelltem und warmem (ca. 80°C) Thermoplasten A gemäss Beispiel 1 wurden der Reihe nach 17g der Paste B gemäss Beispiel 2, 2.5g desselben Polypropylendiols wie in Beispiel 2, 0.9g Jeffamin D400, 7.5g Russ und 0.06g 58% Wismuthtrisneodecanoat in Neodecansäure zugeführt und unter Vakuum homogen gemischt. Der resultierende Klebstoff reagierte nicht mit Feuchtigkeit, war mehrere Wochen bei Standardklima (23°C, 50 r.F.) stabil, bei Raumtemperatur anfassbar und plastisch verformbar. Nach der Hitzehärtung im Umluftofen, 10 Minuten bei 140°C, zeigte der Klebstoff eine Festigkeit um 8 MPa und eine Bruchdehnung um 500%.

### Beispiel 4

### Verwendung des erfindungsgemässen Klebstoffes nach Beispiel 3 für die Herstellung eines kompletten Scheibenmodules inklusive eines Montageklebstoffes

Das unter Verwendung des Klebstoffs nach Beispiel 3 mit herkömmlichem Verfahren angefertigte Scheibenmodul ist aufgrund der praktisch nicht vorhandenen Verschmutzungsgefahr robust im Handling. Es wird, zum Schutz vor Kontaminationen durch z.B. Staubteilchen, vorzugsweise in einem Behälter aber ohne weiteren Massnahmen an die Fertigungslinie, z.B. beim Fahrzeughersteller, geliefert. Lieferung und Verarbeitung erfolgt vorzugsweise innerhalb von ca. 4 bis 6 Wochen. Der Klebstoff wird kurz vor oder nach der Montage für die Vernetzung aktiviert. Nach dem Scheibeneinbau ist der Klebstoff, abhängig vom Zeitpunkt des Aktivierungsschrittes, thermoplastisch verformbar, und er ist dank seiner hohen Kohäsion ohne mechanische Fixationshilfen direkthaftend. Dieses "ready-to-mount" Scheibenmodul bietet den Vorteil, dass der Fahrzeughersteller einen Klebstoffauftrag nicht mehr durchführen muss und diese Aufgabe den Glasherstellern überlassen kann.

## Patentansprüche

1. Reaktivierbarer, thermoplastischer Klebstoff, **dadurch gekennzeichnet, dass** dieser mit Feuchtigkeit nicht reagiert, bei Raumtemperatur anfassbar ist, nach dem Fügen plastisch verformbar und ohne mechanische Fixationen direkthaftend ist und nach einer Aktivierung mittels Energie aushärtet.

2. Reaktivierbarer Klebstoff, gemäss Anspruch 1, **dadurch gekennzeichnet, dass** dieser:
A) mindestens einen Hydroxyl- und/oder Amino- und/oder Mercaptogruppen enthaltenden, bei Raumtemperatur plastisch verformbaren Thermoplasten, und
B) mindestens eine feste, mindestens zwei Isocyanatgruppen enthaltende Substanz, wobei die Oberfläche dieser Substanz mit aktiven Wasserstoffgruppen tragenden Verbindungen deaktiviert ist,
enthält oder daraus besteht.

3. Reaktivierbarer Klebstoff gemäss Anspruch 2, **dadurch gekennzeichnet, dass**
der Thermoplast A) ausgewählt ist aus der Gruppe bestehend aus Thermoplasten, die erhältlich sind durch Kettenverlängerung eines Isocyanatgruppen enthaltenden Prepolymers mit einem Polyol, insbesondere einem Diol, oder durch Terminierung der Isocyanatgruppen eines höhermolekularen Prepolymers mit z.B. Mercapto- oder Aminogruppen enthaltenden Hydroxylverbindungen oder zweifunktionellen Amino- bzw. Mercaptogruppen enthaltenden Verbindungen.

4. Reaktivierbarer Klebstoff gemäss einem der Ansprüche 1 bis 3, **dadurch gekennzeichnet, dass** er zusätzlich mindestens eine Komponente C), ausgewählt aus der Gruppe bestehend aus Weichmacher, Thixotropiermittel, Füllstoffe, Additive, und Mischungen derselben, enthält.

5. Verwendung eines reaktivierbaren Klebstoffs, gemäss einem der Ansprüche 1 bis 4 für ein "Ready-to-mount" Scheibenmodul.

6. Scheibenmodul, **dadurch gekennzeichnet, dass** es einen Auftrag von reaktivierbarem thermoplastischem Klebstoff gemäss einem der Ansprüche 1 bis 4 aufweist.

7. Verfahren zur Herstellung eines Scheibenmoduls gemäss Anspruch 6, **dadurch gekennzeichnet, dass** eine Klebstoffraupe gemäss einem der Ansprüche 1 bis 4 auf eine Glasscheibe aufgebracht wird.

8. Verfahren gemäss Anspruch 7, **dadurch gekennzeichnet, dass** der Auftrag mittels Pressvorrichtung bei Temperaturen zwischen 50°C und 100°C erfolgt.

9. Verfahren zur Herstellung einer Klebeverbindung, **dadurch gekennzeichnet, dass** ein mit einer Raupe aus Klebstoff gemäss einem der Ansprüche 1 bis 4 versehenes Substrate mit einem zweiten Substrat derart verbunden wird, dass der Klebstoff mit dem zweiten Substrat in Kontakt steht, wobei der Klebstoff vor oder nach dem Verbinden der Substrate durch Energiezufuhr aktiviert wird.

10. Verfahren gemäss Anspruch 9, **dadurch gekennzeichnet, dass** die Energiezufuhr in Form von thermischer, vibratorischer oder elektromagnetischer Energie erfolgt.
